# FASCICULE DE BREVET EUROPEEN

(11) **EP 0 783 838 B1**
(45) Date de publication et mention de la délivrance du brevet: **11.03.1998**
(21) Numéro de dépôt: 95440084.2
(22) Date de dépôt: 14.12.1995
(51) Int. Cl.: A21C 13/02

(54) **Armoire de détente à balancelles**
Gärschrank mit schwenkbaren Körben
Proofing chamber with pivoting trays

(43) Date de publication de la demande: 16.07.1997
(73) Titulaire: BONGARD (S.A.), F-67810 Holtzheim (FR)
(72) Inventeur: Wanaverbecq, Didier, F-67190 Mollkirch (FR); Tychyj, Jean-Marc, F-67450 Mundolsheim (FR); Kunegel, Hervé, F-67130 Labroque (FR)
(74) Mandataire: Littolff, Denis

(56) Documents cités:
- EP-A- 0 040 565
- EP-A- 0 616 773
- FR-A- 2 609 598
- US-A- 3 699 899
- US-A- 3 754 464

## Description

La présente invention concerne un appareillage intervenant dans le processus de panification, destiné à assurer la phase de détente de pâtons de pâte à pain avant leur façonnage, et également un appareillage combiné permettant d'assurer à la fois la détente et le façonnage des pâtons. La détente, intervenant après le boulage de la pâte et avant le façonnage des pâtons, contribue avec ces deux étapes à reformer une structure continue en surface de la pâte, structure qui est perdue lors de la division intervenant en amont du boulage.

Cette phase de la panification, encore appelée préfermentation, permet d'intervenir dans l'organisation structurelle de la pâte, laquelle subit un dégazage affectant sa microstructure au cours de la phase de division. Le repos favorise la reconstitution, redonne de l'extensibilité à la pâte, dont la surface redevient lisse et abandonne sa texture collante.

Ce repos s'effectue à l'intérieur de chambres spécialement prévues à cet effet, où les pâtons restent pendant la durée nécessaire à la préfermentation, avant d'être envoyés à l'étape de façonnage. En général, les pâtons se déplacent continûment, afin que le processus de préfermentation puisse être intégré à une chaîne plus vaste incluant toutes les étapes de la panification. Dans un premier temps, les chambres de détente comprenaient une succession de tapis roulants conduisant les pâtons de la sortie de la bouleuse vers l'entrée de la façonneuse.
Selon une configuration fréquemment adoptée, ces tapis étaient superposés, de manière que les pâtons tombent de l'un à l'autre tout en restant dans l'enceinte de la chambre. Ce système présentait l'inconvénient majeur d'être très coûteux en surface au sol, problème crucial dans les fournils des boulangers, où l'on cherche systématiquement à gagner de la place. La façonneuse, disposée à part, occupe également une certaine surface au sol, à ajouter à la précédente.

C'est pourquoi, pour la détente, on a adopté une solution plus compacte, consistant en l'utilisation d'armoires dites "à balancelles", comprenant des nacelles logeant les pâtons, lesquelles se déplacent selon un circuit doté de portions horizontales et verticales à l'intérieur de l'armoire. Ce circuit, entraînant lesdites nacelles à l'aide d'un système mécanique classique à pignons et chaînes, est plus ou moins long et compliqué selon l'armoire et sa compacité. Le problème de l'encombrement est cependant toujours posé, notamment en corrélation avec la question du temps nécessaire à la préfermentation.

En France, on considère généralement que les pâtons doivent reposer durant environ 20 à 25 minutes, période au cours de laquelle ils se déplacent, dans leurs nacelles, dans l'armoire à balancelles. Ils effectuent alors un nombre de cycles qui dépend à la fois de la longueur du circuit et de la durée de repos prévue. Le temps de repos varie cependant d'un pays à l'autre, notamment en fonction de la constitution de la pâte. Ainsi, aux Pays-Bas, il est d'usage de faire reposer les pâtons de 40 à 50 minutes. Pour satisfaire à des impératifs de productivité visant à réaliser la préfermentation d'une quantité maximale de pâtons par heure, on peut principalement influer sur les paramètres suivants :
- augmenter le volume de l'armoire à balancelles, pour y loger plus de pâtons, ou
- diminuer la durée de détente pour augmenter la productivité en phase de préfermentation.

Aucune de ces solutions n'est pleinement satisfaisante, car la première repose le problème de l'encombrement, notamment au sol, et la seconde revient à prendre un risque pour la qualité de la pâte en vue des traitements ultérieurs. C'est néanmoins dans la seconde direction que la réflexion à été poursuivie, notamment via la question de l'utilisation des micro-ondes, dont on sait qu'elles accélèrent sensiblement certains traitements s'appliquant à des denrées alimentaires, le plus connu étant bien entendu la cuisson.

Les rayonnements à micro-ondes ont en effet des propriétés permettant d'aboutir à une préfermentation des pâtons beaucoup plus rapide. Au lieu des durées excédant 20 minutes nécessitées par les techniques mentionnées auparavant, la détente est obtenue au bout de 1 à 2 minutes avec des micro-ondes, et elle conduit à des pâtons dont les caractéristiques structurelles sont tout à fait appropriées aux traitements suivant la préfermentation (façonnage...).

Une enceinte a donc été construite pour mettre en application les résultats obtenus, sous la forme d'un tunnel dans lequel les pâtons se déplacent linéairement de l'entrée vers la sortie, trajet sur au moins une portion duquel ils sont exposés à un rayonnement de micro-ondes. Les dispositifs utilisés ont cependant posé de multiples problèmes, et ne se sont pas avérés satisfaisant à l'utilisation.

Ainsi, le dégagement d'humidité produit après 1 à 2 heures de fonctionnement tend à coller les pâtons, qu'il est plus difficile d'extraire du dispositif. La disposition en tunnel ne facilite en outre pas les opérations de maintenance, car l'accessibilité aux différentes parties fonctionnelles n'est pas aisée. Enfin, le problème d'espace n'est pas résolu, car l'implantation dans un fournil d'un tunnel s'est avérée difficile en terme d'optimisation et de gestion d'espace, d'autant que lesdits tunnels, initialement prévus à une longueur d'environ 2,50 m, se sont vite vus portés à une longueur aux alentours de 6 m, à cause de diverses contraintes techniques. Dans une telle structure, la façonneuse est nécessairement située en aval du tunnel à l'extérieur de celui-ci.

Le tunnel à micro-ondes, notamment décrit dans le brevet français N° 2 609 598, ne fonctionnant pas de manière satisfaisante, et les balancelles et autres appareillages de détente nécessitant des durées d'exposition incompatibles avec les rendements désirés avec les encombrements désirés (si l'on veut obtenir un quota de 1200 pâtons par heure, à raison d'une détente de 20 minutes telle que pratiquée en France, il est nécessaire de mettre 400 pâtons dans l'armoire, d'où un encombrement important), on s'est posé la question de l'utilisation de micro-ondes dans une autre configuration qu'un tunnel.

Le brevet EP-A-0 040 565 concerne un appareil électrique de cuisson doté d'une zone de chauffage à infrarouge et d'une zone de cuisson basée sur l'utilisation des micro-ondes. Selon une variante présentée dans le document, l'appareil prend la forme d'une armoire permettant l'introduction de pâtons surgelés et le retrait des pâtons cuits sur la même face, grâce à une chaîne de chariots de transport.

Les chariots se déplacent le long d'une boucle, qui s'apparente à une bande d'allure verticale, car les deux trajets en sens inverse sont pratiquement au contact l'un de l'autre. En conséquence, l'armoire divulguée est de dimension horizontale très réduite par rapport à la hauteur.

Compte tenu de la nature particulière des micro-ondes, nécessitant des guides et pièges d'onde ainsi que des surfaces de confinement réfléchissantes dans l'enceinte où s'appliquent les micro-ondes, la configuration en tunnel est cependant, dans un appareillage tel que décrit auparavant, la plus naturelle. Le problème est d'arriver à un volume relativement réduit, notamment en largeur, et d'allure plutôt allongée, d'où l'impossibilité à priori d'utiliser les micro-ondes dans une armoire à balancelles classique, utilisant des nacelles très longues à chargement frontal.

Une telle configuration va à l'encontre des usages traditionnels dans ce domaine, comme en témoignent par exemple les deux documents de l'art antérieur précités. Les nacelles à chargement frontal, synonymes de grandes quantités de pâtons traités, ne proposent qu'un trajet en boucle limité, a priori peu compatible avec les exigences des micro-ondes. Il existe bien un dispositif à nacelles d'encombrement réduit, faisant l'objet du brevet EP-A-0 616 773, mais sa structure rend l'application de micro-ondes très difficile, voire impossible, car les pâtons ne suivent pas un trajet continu. Les dispositifs à bandes transporteuses, offrant un unique trajet suffisamment long, sont a priori incompatibles avec des dispositifs à nacelles, notamment parce que celles qui sont connues sont souvent de grande largeur.

C'est pourtant la solution retenue par la présente invention, qui est également du type armoire à balancelles munies de nacelles portant les pâtons en cours de préfermentation, effectuant un circuit en boucle fermée à l'intérieur de l'armoire, une portion du circuit de déplacement des balancelles étant équipée d'un dispositif à micro-ondes soumettant les pâtons à une énergie micro-onde pendant une fraction de leur trajet dans l'armoire à balancelles, cette dernière étant notamment caractérisée en ce quelle est de forme sensiblement parallélépipédique, avec une zone centrale évidée, le circuit de déplacement des pâtons formant une boucle autour de la zone centrale évidée, ledit circuit de déplacement des balancelles se développant parallèlement aux façades principales de l'armoire.

Les contraintes techniques nées de l'implantation d'une enceinte interne, avec générateur, guides et pièges d'ondes sur un volume nécessairement réduit, ont donc imposé une modification majeure de la configuration du circuit des balancelles, qui est le coeur de l'invention. Cette modification est d'ailleurs également justifiée par d'autres considérations, allant du gain de place dans un fournil tel qu'évoqué auparavant au gain de temps procuré par l'utilisation des micro-ondes (permettant de réduire sensiblement le nombre des pâtons traités simultanément) en passant par la possibilité d'inclure en un seul dispositif combiné une façonneuse et une armoire de détente. Cette dernière caractéristique augmente encore le gain de volume disponible.

Au lieu de nacelles de grande longueur portant le maximum de pâtons chargés frontalement, l'appareillage de l'invention travaille avec des nacelles courtes supportant un nombre réduit de pâtons. La modification a consisté à passer d'un circuit de déplacement des nacelles suivant un trajet se développant parallèlement aux places latérales de l'armoire à un circuit se développant parallèlement aux grandes façades de ladite armoire, dans une configuration d'armoire sensiblement parallélépipédique, avec une zone centrale évidée, le circuit de déplacement des pâtons formant une boucle autour de ladite zone centrale.

Ceci peut permettre d'aboutir à des circuits plus longs qu'auparavant procurant au surplus un gain de volume appréciable, notamment mais non exclusivement au niveau de la surface au sol. En outre, cette configuration permet d'inclure des lignes droites de plus grande longueur qu'auparavant, propices à l'introduction d'un dispositif à micro-ondes. Elle permet au surplus l'établissement d'un circuit périphérique, donc permettant l'existence de la zone centrale.

Dans l'armoire à balancelles selon l'invention, la zone centrale évidée est par exemple également d'allure sensiblement parallélépipédique. Elle participe de ce fait à l'économie d'espace de l'ensemble en ce que l'on peut y inclure d'autres dispositifs participant à la chaîne de panification, dont par exemple une façonneuse. L'armoire à double fonction (détente, façonnage) présente alors une unité de volume permettant notamment un gain de surface au sol appréciable.

Selon l'invention, le circuit effectué par les balancelles forme une boucle autour de l'évidement précédent, qui traverse l'armoire transversalement et de part en part. L'orifice de sortie des pâtons se situe dans la zone centrale évidée, de préférence en partie supérieure, de manière à pouvoir alimenter en pâtons préfermentés des appareils situés en aval dans la chaîne de panification et disposés dans ladite zone centrale. De préférence, il pourra, comme on l'a dit, s'agir d'une façonneuse.

Dans l'armoire à balancelles de l'invention, le dispositif à micro-ondes se situe de préférence dans la partie inférieure, sous l'évidement central. Cette partie présente des caractéristiques topologiques adéquates, notamment en longueur. Les nacelles effectuent au moins un passage dans la zone soumise au rayonnement micro-onde, et expulsent leurs pâtons par retournement commandé par un doigt fixe placé au voisinage de l'orifice de sortie, qui opère un retournement par pivotement des nacelles. Ceux-ci peuvent tomber, par gravité, dans la façonneuse.

Ces nacelles, réalisées dans un matériau transparent aux micro-ondes, sont beaucoup plus courtes que celles qui équipaient jusqu'alors les armoires à balancelles de l'art antérieur, puisqu'elles doivent être de longueur inférieure à la dimension transversale de l'armoire. Auparavant, lesdites balancelles pouvaient comporter jusqu'à 8 pâtons, alors que celles-ci n'en comptent de préférence que deux.

La configuration de l'armoire de l'invention, totalement nouvelle, a donc permis d'intégrer un dispositif à micro-ondes dans une machine dont les conceptions précédentes n'étaient pas du tout adaptées à une telle combinaison, ainsi qu'une façonneuse dans la partie centrale du circuit de déplacement des balancelles créé par la nouvelle conception.

On va maintenant décrire l'appareillage de l'invention plus en détail, en se référant aux figures placées en annexe, pour lesquelles :
- La figure 1 est une vue en perspective de l'armoire, montrant sa forme générale ;
- La figure 2 est une vue analogue à la précédente, sans capot ;
- La figure 3 est une vue combinant une armoire de détente et une façonneuse ;
- La figure 4 montre un type de nacelle pouvant être utilisé dans l'armoire de l'invention ; et
- La figure 5 représente un schéma du trajet des balancelles.

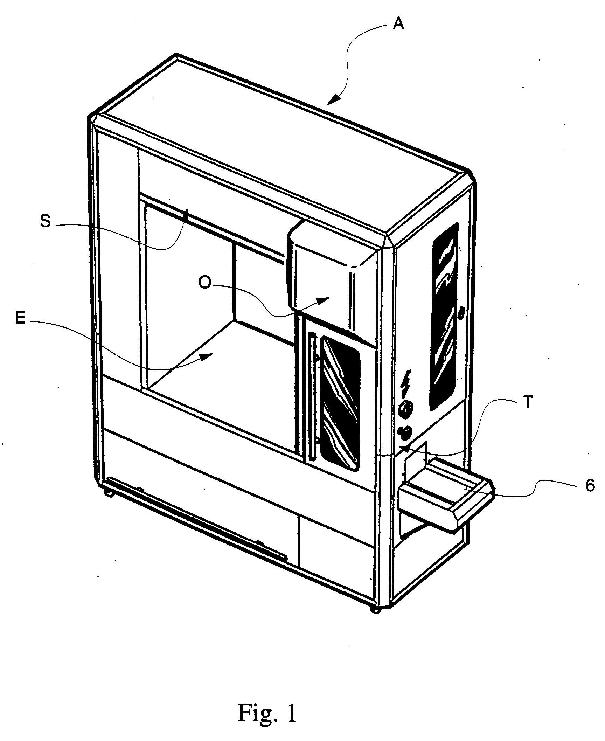

La figure 1 permet de se faire une idée plus précise de la configuration géométrique de l'armoire à balancelles de la présente invention : elle est de préférence globalement parallélépipédique, munie d'une zone centrale (E) évidée, traversant l'armoire (A) de part en part. Dans l'évidement (E), une partie proéminente (O) signale l'emplacement du bloc moteur.

L'orifice d'entrée (T) est précédé d'un tapis d'introduction (6), par exemple du type bande transporteuse sans fin.

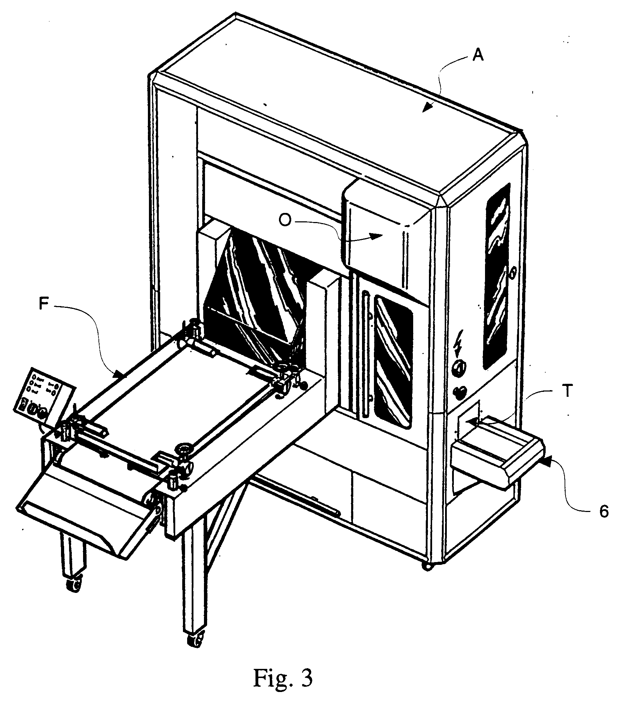

L'orifice de sortie (S) n'est pas directement visible, mais signalé par une flèche portant la même référence. A l'intérieur de la chaîne mécanique de panification, ces orifices peuvent être reliés soit directement à d'autres machines, soit à des bandes transporteuses. Par exemple, une façonneuse (F) peut être installée dans la partie évidée (E), recueillant les pâtons provenant de l'orifice de sortie (S), comme il apparaît en figure 3.

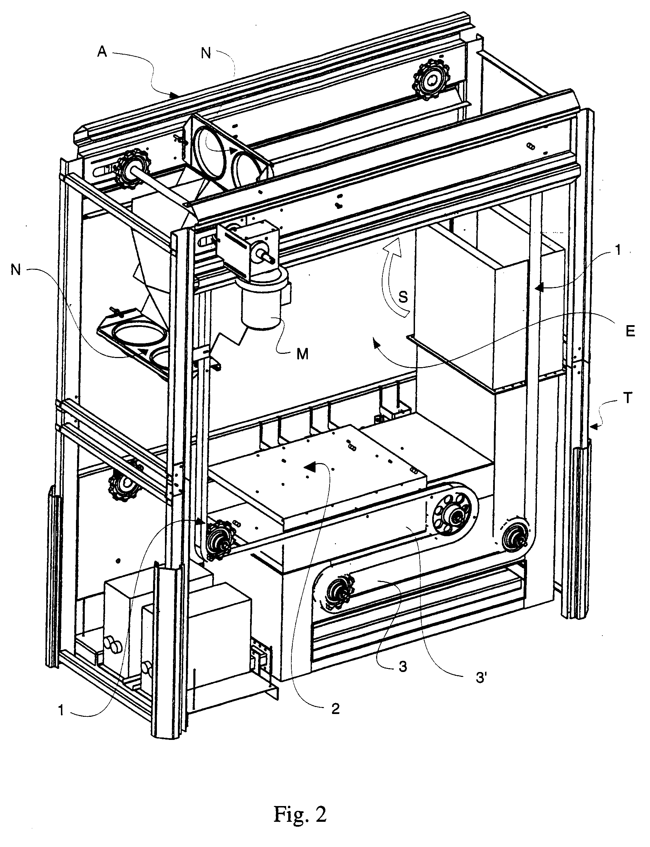

En se référant à présent à la figure 2, l'armoire se présente sans son capot de tôle, et laisse apparaître les divers éléments la constituant. Il n'y a évidemment aucun élément fonctionnel au centre, à la place de la zone évidée (E) de la figure précédente, l'ensemble des constituants se concentrant sur la périphérie. Un bloc moteur (M) apparaît sur la façade la plus proche, arrimé à un profilé métallique formant le cadre de l'armoire (A). Ce bloc (M) peut également être fixé à l'autre extrémité du cadre, comme dans la figure précédente.

Les balancelles (N) sont entraînées par un système à pignons et chaîne connu en soi, la chaîne étant symbolisée par un profil (1) courant le long du circuit que les balancelles (N) doivent parcourir.

Le dispositif à micro-ondes (2), également connu en soi, comporte classiquement un magnétron transformant l'énergie électrique en énergie à micro-onde, ainsi que des guides d'onde et des pièges d'onde permettant d'une part la meilleure application possible de l'émission micro-onde aux pâtons et empêchant d'autre part lesdites micro-ondes de s'échapper via des réflexions multiples dans le bâti de l'armoire.

L'armoire de l'invention (A) comporte d'ailleurs de multiples sécurités électroniques destinées à prévenir tout accident. Comme cela apparaît sur cette figure, ledit dispositif à micro-onde est placé en bas de l'armoire, sensiblement sous la zone centrale évidée (E).

Par rapport à l'orifice d'entrée (T), au niveau duquel sont effectués les chargements en pâtons provenant généralement d'une bouleuse via une bande transporteuse (6), le dispositif à micro-onde se situe en aval d'un tunnel vertical apportant les pâtons en partie inférieure de l'armoire (A). La chaîne et les pignons sont ensuite disposés de manière à créer des chicanes (3, 3') dont le but est de doubler le trajet au niveau du dispositif à micro-ondes.

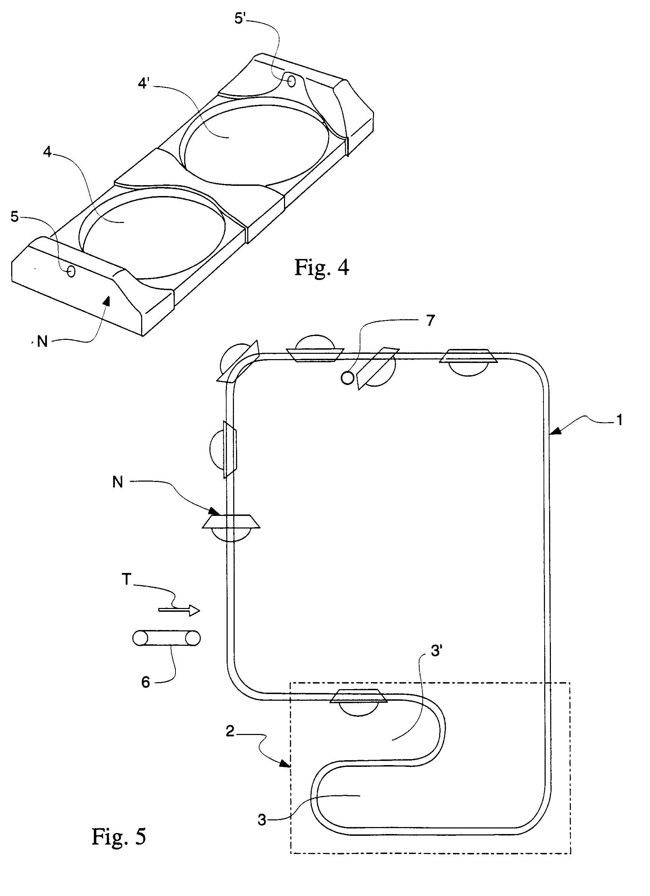

En partie supérieure, au voisinage de l'orifice de sortie (S), un dispositif permet le retournement des pâtons vers ledit orifice (S). Il s'agit d'au moins un doigt fixe (7), qui utilise l'aptitude à pivoter des balancelles autour d'arbres auxiliaires placés dans les orifices (5, 5') (figure 4) : la balancelle entre en contact avec ledit doigt (7) au niveau du petit côté avant d'un trapèze latéral, lequel doigt fixe (7) provoque un pivotement autour de l'axe desdits arbres auxiliaires, entraînant l'expulsion des pâtons. On aperçoit, en partie supérieure de la figure, la balancelle (N) pivotant de manière à expulser ses pâtons. Ceci est également montré en figure 5.

La figure 4 montre une balancelle (N) dotée de deux orifices (4, 4') dans lesquels sont placées les nacelles logeant les pâtons. L'accrochage à la chaîne se fait de manière classique à l'aide desdits arbres auxiliaires fixés au niveau des orifices (5, 5'), autour desquels le pivotement précédent a lieu.

En figure 5, le trajet complet des nacelles est particulièrement bien montré, ainsi que la zone d'exposition aux micro-ondes.

D'une manière générale, la configuration particulière de l'armoire de détente de l'invention permet un agencement judicieux de deux appareils importants de la chaîne de panification.

L'ensemble assurant la préfermentation et le façonnage se trouve ainsi confiné dans le volume parallélépipédique de type armoire, procurant un gain de place conséquent rendu possible par la nouvelle conception née de la réflexion visant à intégrer un dispositif à micro-onde dans une armoire à balancelles. C'est cette réflexion qui a conduit à changer le plan de défilement des balancelles, à diminuer corrélativement la longueur de celles-ci, d'où la création de l'évidement central (E) libérant un volume finalement pris par l'unité de façonnage.

## Revendications

1. Appareillage intervenant dans le processus de panification, et notamment destiné à assurer la phase de détente ou préfermentation de pâtons de pâte à pain au cours dudit processus, du type armoire (A) à balancelles (N) munies de nacelles portant les pâtons en cours de préfermentation, lesdites balancelles (N) effectuant un circuit en boucle fermée à l'intérieur de l'armoire, une portion du circuit de déplacement étant équipée d'un dispositif à micro-ondes (2) soumettant les pâtons à une énergie micro-onde pendant une fraction de leur trajet dans l'armoire à balancelles (A), caractérisé en ce que ladite armoire à balancelles (A) est de forme sensiblement parallélépipédique, avec une zone centrale évidée (E), le circuit de déplacement des pâtons formant une boucle autour de la zone centrale évidée (E), ledit circuit de déplacement des balancelles (N) se développant parallèlement aux façades principales de l'armoire (A).

2. Appareillage selon la revendication 1, caractérisé en ce qu'il se combine, à l'intérieur dudit volume parallélépipédique, avec une façonneuse donnant leur forme aux pâtons, située dans la zone centrale évidée.

3. Appareillage selon l'une des revendications 1 et 2, caractérisé en ce qu'un orifice de sortie (S) des pâtons se situe dans ladite zone centrale évidée(E).

4. Appareillage selon la revendication 3, caractérisé en ce que l'orifice de sortie (S) donne dans l'entrée de la façonneuse, qu'elle alimente en pâtons préfermentés.

5. Appareillage selon l'une quelconque des revendications précédentes, caractérisé en ce que le dispositif (2) soumettant les pâtons à une énergie micro-onde se situe dans la partie inférieure de l'armoire (A), sous la zone centrale évidée (E).

6. Appareillage selon l'une quelconque des revendications précédentes, caractérisé en ce que le circuit suivi par les balancelles (N) portant leurs pâtons comporte au moins un doigt fixe (7) agissant sur au moins un côté trapézoïdal des nacelles et provoquant le retournement par pivotement des balancelles (N) autour des arbres auxiliaires logés dans les orifices (5, 5'), au voisinage de l'orifice de sortie (S).

## Claims

1. Equipment taking part in the process of bread making, and in particular designed to ensure the expansion or pre-proving phase of pieces of bread dough during the said process, of the cabinet type (A) with swing-trays (N) provided with pockets carrying the dough pieces during pre-proving, the said swing-trays (N) describing a circuit in a closed loop inside the cabinet, a portion of the circuit in which they move being equipped with a microwave device (2) subjecting the dough pieces to microwave energy during a fraction of their path in the swing-tray cabinet (A), characterized in that the said swing-tray cabinet (A) has a substantially parallelepiped shape, with a central hollow zone (E), the circuit in which the dough pieces move forming a loop around the central hollow zone (E), the said circuit in which the swing-trays (N) move extending parallel to the principal faces of the cabinet (A) .

2. Equipment according to claim 1, characterized in that it is combined, inside the said parallelepiped-shaped volume, with a forming device giving the dough pieces their shape, situated in the central hollow zone.

3. Equipment according to either of claims 1 or 2, characterized in that an outlet opening (S) for the dough pieces is situated in the said central hollow zone (E).

4. Equipment according to claim 3, characterized in that the outlet opening (S) opens out into the inlet of the shaping device, which it feeds with pre-proved dough pieces.

5. Equipment according to any one of the preceding claims, characterized in that the device (2) subjecting the dough pieces to microwave energy is situated in the lower part of the cabinet (A), under the central hollow zone (E).

6. Equipment according to any one of the preceding claims, characterized in that the circuit followed by the swing-trays (N) carrying their dough pieces, has at least one fixed finger (7) acting on at least one trapezoidal side of the pockets and causing the swing-trays (N) to turn over by pivoting about auxiliary shafts housed in the openings (5, 5'), in the vicinity of the outlet opening (S).

## Patentansprüche

1. Im Verfahren zur Brotherstellung mitwirkende und insbesondere für die Gewährleistung der Erholungsphase oder Vorfermentierung von Teigklumpen aus Brotteig im Verlauf dieses Verfahrens bestimmte Einrichtung von der Art eines Schranks (A) mit Kippträgern (N), welche mit Schiffchen zur Aufnahme der Teigklumpen im Verlauf der Vorfermentierung versehen sind, wobei die Kippträger (N) einen Umlauf in Form einer geschlossenen Schleife im Inneren des Schranks ausführen und ein Abschnitt der Umlaufbahn mit einer Mikrowelleneinrichtung (2) ausgestattet ist, welche die Teigklumpen während eines Teils ihres Umlaufs in dem Kippträger-Schrank (A) mit Mikrowellenenergie beaufschlagt,
**dadurch gekennzeichnet,** daß der Kippträger-Schrank (A) weitgehend die Form eines Parallelepipeds mit einer zentralen Aussparungszone (E) hat, wobei die Umlaufbahn der Teigklumpen eine Schleife um die zentrale Aussparungszone (E) bildet und die Umlaufbahn der Kippträger (N) parallel zu den Haupt-Stirnflächen des Schranks (A) verläuft.

2. Einrichtung nach Anspruch 1,
**dadurch gekennzeichnet,** daß sie innerhalb des Parallelepiped-Volumens mit einer Formgebungseinrichtung kombiniert ist, die den Teigklumpen ihre Form gibt und in der zentralen Aussparungszone angeordnet ist.

3. Einrichtung nach einem der Ansprüche 1 und 2,
**dadurch gekennzeichnet,** daß in der zentralen Aussparungszone (E) eine Ausgabeöffnung (S) für die Teigklumpen ausgebildet ist.

4. Einrichtung nach Anspruch 3,
**dadurch gekennzeichnet,** daß die Ausgabeöffnung (S) in den Eingang der Formgebungseinrichtung mündet, der sie die vorfermentierten Teigklumpen zuführt.

5. Einrichtung nach einem der vorangehenden Ansprüche,
**dadurch gekennzeichnet,** daß die die Teigklumpen mit Mikrowellenenergie beaufschlagende Einrichtung (2) im Unterteil des Schranks (A) unter der zentralen Aussparungszone (E) angeordnet ist.

6. Einrichtung nach einem der vorangehenden Ansprüche,
**dadurch gekennzeichnet**, daß die von den die Teigklumpen tragenden Kippträgern (N) abgefahrene Umlaufbahn zumindest einen feststehenden Finger (7) aufweist, der mindestens auf eine trapezförmige Seite der Schiffchen einwirkt und in der Nähe der Austrittsöffnung (S) ein Umschlagen durch Schwenken der Kippträger (N) um Tragachsen bewirkt, die in Öffnungen (5, 5') aufgenommen sind.
